# EUROPEAN PATENT APPLICATION

(11) **EP 2 571 275 A1**
(43) Date of publication of application: **20.03.2013**
(21) Application number: 11780496.3
(22) Date of filing: 25.04.2011
(51) Int. Cl.: H04N 13/00, H04N 7/32

(54) **IMAGE PROCESSING DEVICE AND IMAGE PROCESSING METHOD**

(30) Priority: 13.05.2010 JP 2010111561
(71) Applicant: Sony Corporation, Tokyo 108-0075 (JP)
(72) Inventor: TAKAHASHI Yoshitomo, Tokyo 108-0075 (JP); YONEMITSU Jun, Tokyo 108-0075 (JP)
(74) Representative: Beder, Jens
(86) International application number: PCT/JP2011/060014
(87) International publication number: WO 2011/142239

(57) **Abstract**

The present invention relates to an image processing apparatus and an image processing method able to generate high-quality synthetic-view images.

A multiview video decoding apparatus 105 receives and decodes an encoded stream obtained as a result of encoding residual information, 2D images 11 for N views, and depth images 12 for N views, the residual information being the error between synthetic-view images generated using the 2D images 11 for N views and the depth images 12 for N views, and 2D images 101 for (M-N) views at the view synthesis positions of the synthetic-view images. A view synthesizing apparatus 15 generates the synthetic-view images by using the 2D images 11 and depth images 12 for N views decoded by the multiview video decoding apparatus 105. A residual information compensating apparatus 106 adds the residual information into the generated synthetic-view images. The present invention may be applied to a system that conducts view synthesis, for example.

## Description

### Technical Field

The present invention relates to an image processing apparatus and image processing method, and more particularly, to an image processing apparatus and image processing method configured to be able to generate high-quality synthetic-view images.

### Background Art

There exists view synthesis technology that generates images with arbitrary views. This view synthesis technology is a technology that generates 2D images for M views (>N) from 2D images for N views and depth images (depth information).

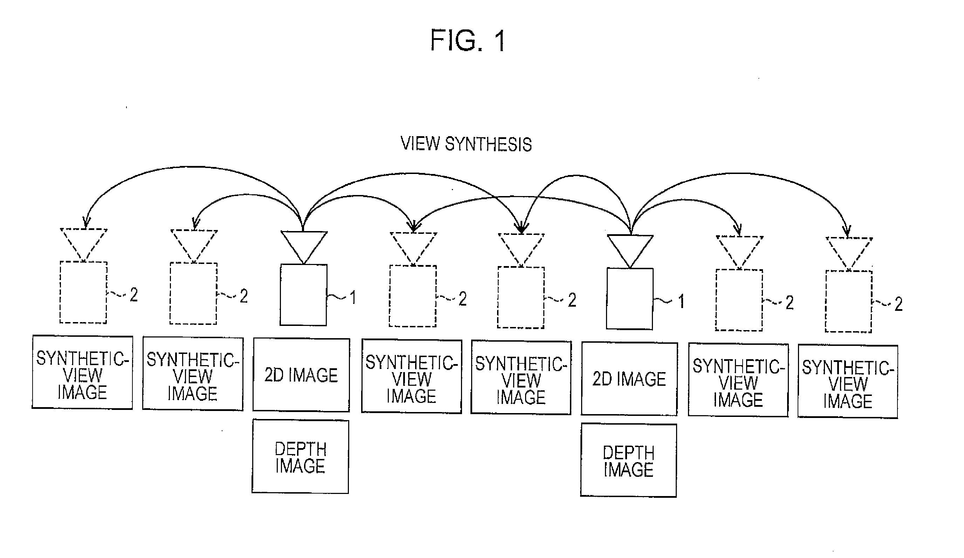

An overview of view synthesis technology will be described with reference to Fig. 1.

As illustrated in Fig. 1, with view synthesis technology, input images 1 consisting of a 2D image and a depth image are input. Then, view synthesis is conducted using the input images 1, and synthetic-view images 2 are generated, being 2D images of views farther inward and outward from the camera positions for the input images 1.

In the example in Fig. 1, synthetic-view images 2 for six views are generated from input images 1 for two views. The input images 1 for two views and the synthetic-view images 2 for six views yield images for a total of eight views.

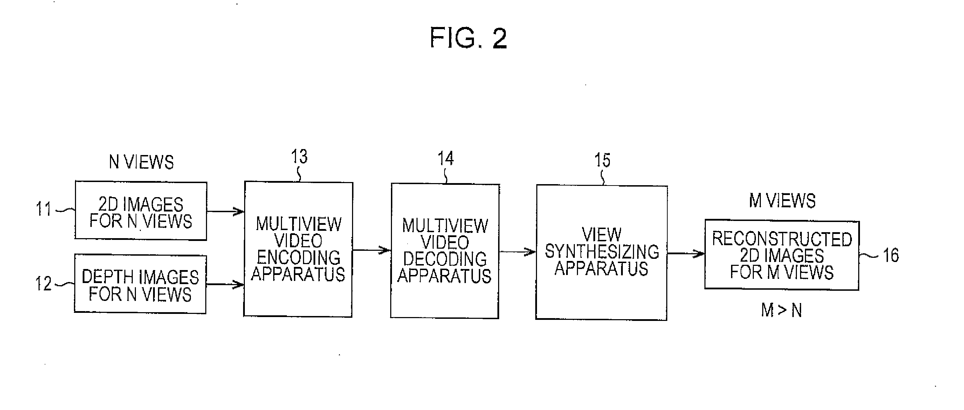

In actual applications, view synthesis technology is used in conjunction with compression technology. An exemplary configuration of a system combining view synthesis technology and compression technology is illustrated in Fig. 2.

In the system in Fig. 2, 2D images 11 for N views and depth images 12 for N views are input into a multiview video encoding apparatus 13.

The multiview video encoding apparatus 13 encodes the 2D images 11 for N views and the depth images 12 for N views in an Advanced Video Coding (AVC) format or Multiview Video Coding (MVC) format, and supplies them to a multiview video decoding apparatus 14.

The multiview video decoding apparatus 14 takes the encoded 2D images 11 for N views and depth images 12 for N views supplied from the multiview video encoding apparatus 13, decodes them in a format corresponding to the AVC format or MVC format, and supplies them to a view synthesizing apparatus 15.

The view synthesizing apparatus 15 uses the 2D images 11 and depth images 12 for N views obtained as a result of the decoding by the multiview video decoding apparatus 14 to generate synthetic-view images for (M-N) views. The view synthesizing apparatus 15 outputs 2D images for M views, which consist of the 2D images 11 for N views and the synthetic-view images for (M-N) views, as reconstructed 2D images 16 for M views.

Meanwhile, a method of encoding and decoding image data for multiple views is described in PTL 1, for example.

### Citation List

### Patent Literature

PTL 1: Japanese Unexamined Patent Application Publication No. 2008-182669

### Summary of Invention

### Technical Problem

With the system in Fig. 2, since images for many views are generated from images for a few views, large amounts of missing information occur in the synthetic-view images. Particularly, information on occluded areas is completely missing in the case of generating images for views farther outward from the camera positions of the input images. In the related art, surrounding in-picture information is used to interpolate such occluded areas. However, there are limits to in-picture interpolation capability, and the quality of synthetic-view images is not adequate.

The present invention has been devised in light of such circumstances, and is configured to enable the generation of high-quality synthetic-view images.

### Solution to Problem

An image processing apparatus according to a first aspect of the present invention is an image processing apparatus provided with receiving means that receives residual information, which is the error between synthetic-view images generated using reference 2D images and depth information, and 2D images at the view synthesis positions of the synthetic-view images, encoding means that encodes the reference 2D images to generate an encoded stream, and transmitting means that transmits the residual information received by the receiving means, the depth information, and the encoded stream generated by the encoding means.

An image processing method according to the first aspect of the present invention corresponds to an image processing apparatus according to the first aspect of the present invention.

In the first aspect of the present invention, residual information is received, residual information being the error between synthetic-view images, which are generated using reference 2D images and depth information, and 2D images at the view synthesis positions of the synthetic-view images. The reference 2D images are encoded to generate an encoded stream. The residual information, the depth information, and the encoded stream are transmitted.

An image processing apparatus according to a second aspect of the present invention is an image processing apparatus provided with receiving means that receives residual information and depth information, the residual information being the error between synthetic-view images generated using reference 2D images and the depth information, and 2D images at the view synthesis positions of the synthetic-view images, decoding means that decodes an encoded stream obtained as a result of encoding the reference 2D images, generating means that generates the synthetic-view images using the reference 2D images decoded by the decoding means and the depth information received by the receiving means, and residual information compensating means that adds the residual information received by the receiving means into the synthetic-view images generated by the generating means.

An image processing method according to the second aspect of the present invention corresponds to an image processing method according to the second aspect of the present invention.

In the second aspect of the present invention, residual information and depth information are received, the residual information being the error between synthetic-view images generated using reference 2D images and the depth information, and 2D images at the view synthesis positions of the synthetic-view images. An encoded stream obtained as a result of encoding the reference 2D images is decoded, and the synthetic-view images are generated using the decoded reference 2D images and the received depth information. The received residual information is added into the generated synthetic-view images. Advantageous Effects of Invention

According to the first aspect of the present invention, it is possible to transmit information for generating high-quality synthetic-view images.

According to the second aspect of the present invention, it is possible to generate high-quality synthetic-view images. Brief Description of Drawings

[Fig. 1] Fig. 1 is a diagram illustrating an overview of view synthesis technology.
[Fig. 2] Fig. 2 is a block diagram illustrating an exemplary configuration of a system of the related art.
[Fig. 3] Fig. 3 is a diagram illustrating an overview of the present invention.
[Fig. 4] Fig. 4 is a diagram illustrating an overview of the present invention.
[Fig. 5] Fig. 5 is a block diagram illustrating an exemplary configuration of an embodiment of a system to which the present invention has been applied.
[Fig. 6] Fig. 6 is a flowchart illustrating processing by the system in Fig. 5.

### Description of Embodiments

### [Overview of invention]

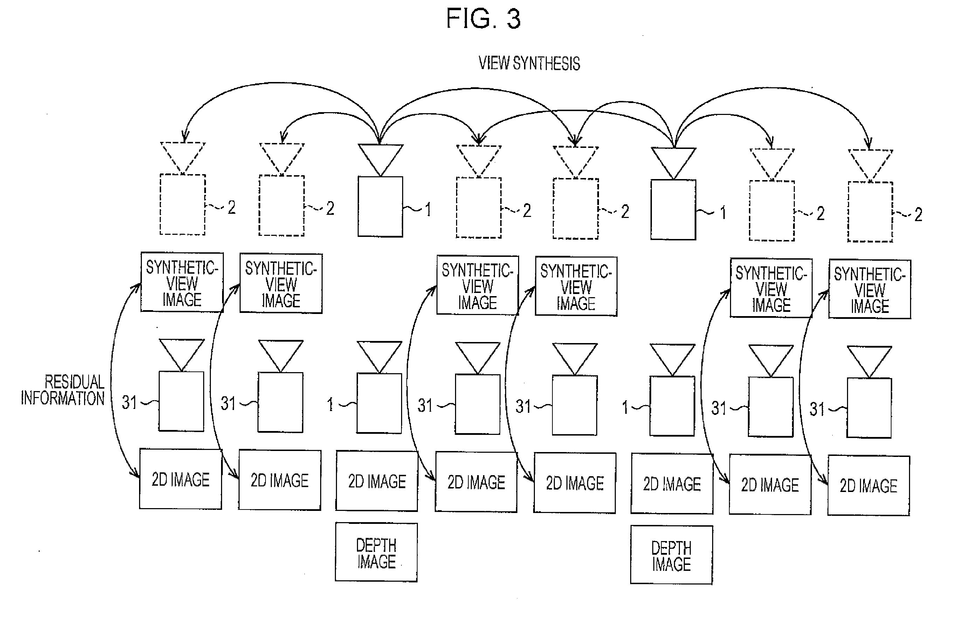

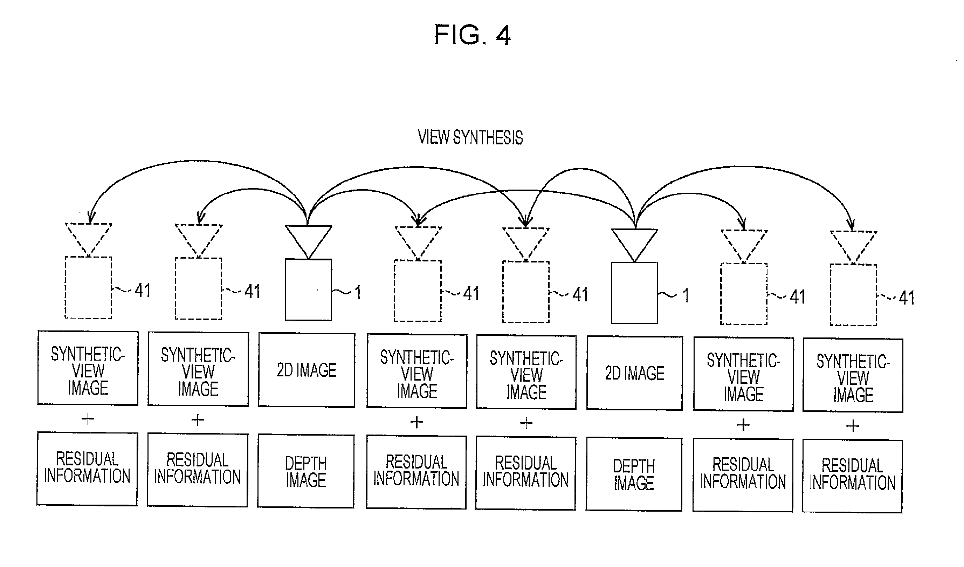

Figs. 3 and 4 are diagrams illustrating an overview of the present invention.

Herein, Figs. 3 and 4 are diagrams illustrating the case of generating images for eight views from images for two views.

As illustrated in Fig. 3, in the present invention not only are input images 1 encoded, but also residual information, which is information on the error between the synthetic-view images 2 and 2D images 31 acquired by cameras at the view synthesis positions of the synthetic-view images 2. This residual information is useful information that includes missing information missing from the synthetic images.

Then, when conducting view synthesis, the input images 1 are used to generate synthetic-view images 2, and those synthetic-view images 2 are compensated by the residual information to generate final synthetic-view images 41, as illustrated in Fig. 4.

In this way, in the present invention, residual information is added into synthetic-view images 2, thereby making it possible to compensate for missing information and generate high-quality synthetic-view images 41.

### [Exemplary configuration of embodiment of system]

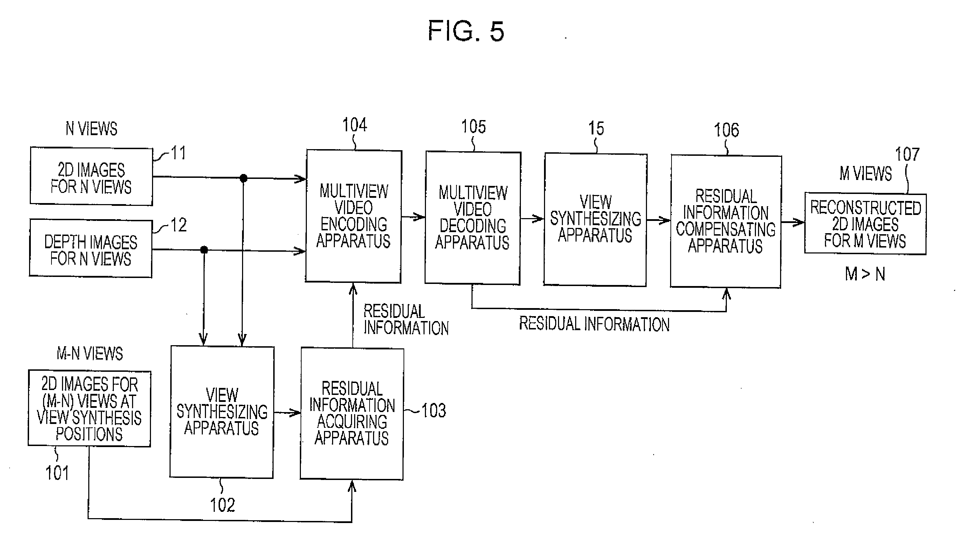

Fig. 5 is a block diagram illustrating an exemplary configuration of an embodiment of a system to which the present invention has been applied.

Note that in Fig. 5, like signs are given to elements like those in Fig. 2, and description thereof is omitted or reduced as appropriate because such description would be repetitive.

In the system in Fig. 5, 2D images 11 for N views (reference 2D images), depth images 12 for N views, and 2D images 101 for (M-N) views at the view synthesis positions are input. The 2D images 101 for (M-N) views are imaged by cameras at the view synthesis positions and are used in order to acquire residual information.

In order to acquire residual information with a residual information acquiring apparatus 103, a view synthesizing apparatus 102 uses the 2D images 11 for N views and the depth images 12 for N views to generate synthetic-view images for (M-N) views similarly to the view synthesizing apparatus 15 in Fig. 1, and supplies them to the residual information acquiring apparatus 103.

The residual information acquiring apparatus 103 calculates the error between the synthetic-view images for (M-N) views supplied from the view synthesizing apparatus 102 and the 2D images 101 for (M-N) views at the view synthesis positions, and takes the result as residual information. The residual information acquiring apparatus 103 supplies the residual information to a multiview video encoding apparatus 104.

The multiview video encoding apparatus 104 encodes the 2D images 11 for N views, the depth images 12 for N views, and the residual information supplied from the residual information acquiring apparatus 103 in an AVC format or MVC format. Then, the multiview video encoding apparatus 104 supplies the encoded stream obtained as a result of the encoding to a multiview video decoding apparatus 105.

The multiview video decoding apparatus 105 decodes the encoded stream supplied from the multiview video encoding apparatus 104 in a format corresponding to the AVC format or MVC format, and obtains 2D images 11 for N views, depth images 12 for N views, and residual information. The multiview video decoding apparatus 105 supplies the 2D images 11 for N views and depth images 12 for N views to the view synthesizing apparatus 15, and supplies the residual information to a residual information compensating apparatus 106.

The residual information compensating apparatus 106 adds the residual information supplied from the multiview video decoding apparatus 105 into synthetic-view images for (M-N) views generated by the view synthesizing apparatus 15, and compensates for the missing information in the synthetic-view images for (M-N) views. The residual information compensating apparatus 106 outputs the compensated synthetic-view images for (M-N) views and the 2D images 11 for N views supplied from the view synthesizing apparatus 15 as reconstructed 2D images 107 for M views. The reconstructed 2D images 107 for M views are used to display a stereoscopic image, for example, and a user is able to view the stereoscopic image without using glasses.

### [Description of processing by system]

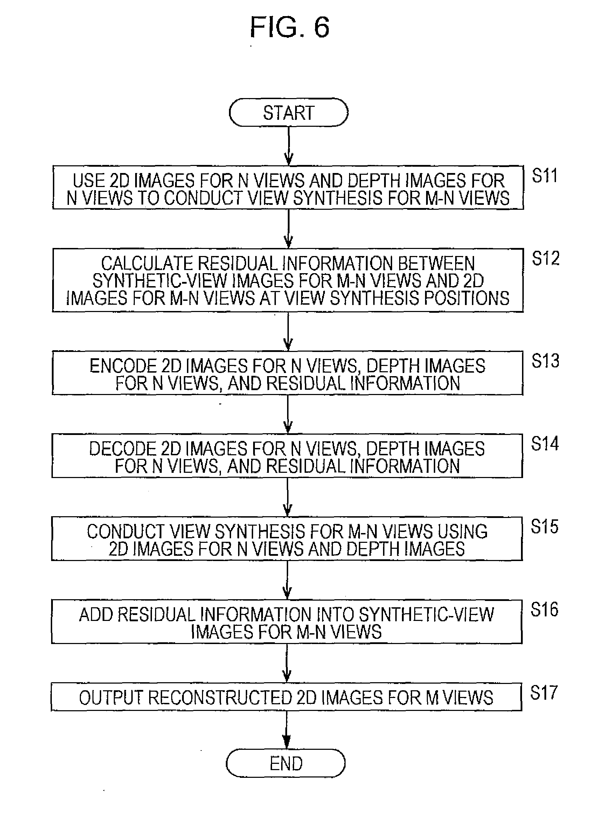

Fig. 6 is a flowchart illustrating processing by the system in Fig. 5.

In step S11 of Fig. 6, the view synthesizing apparatus 102 uses 2D images 11 for N views and depth images 12 for N views to conduct view synthesis for (M-N) views and generate synthetic-view images for (M-N) views. The view synthesizing apparatus 102 then supplies the synthetic-view images for (M-N) views to the residual information acquiring apparatus 103.

In step S12, the residual information acquiring apparatus 103 calculates residual information between the synthetic-view images for (M-N) views supplied from the view synthesizing apparatus 102 and 2D images 101 for (M-N) views at the view synthesis positions. The residual information acquiring apparatus 103 supplies the residual information to a multiview video encoding apparatus 104.

In step S13, the multiview video encoding apparatus 104 encodes the 2D images 11 for N views, the depth images 12 for N views, and the residual information supplied from the residual information acquiring apparatus 103 in an AVC format or MVC format. Then, the multiview video encoding apparatus 104 supplies the encoded stream obtained as a result to the multiview video decoding apparatus 105.

In step S14, the multiview video decoding apparatus 105 decodes the encoded stream in a format corresponding to the AVC format or MVC format, the encoded stream being the encoded 2D images 11 for N views, depth images 12 for N views, and residual information supplied from the multiview video encoding apparatus 104. The multiview video decoding apparatus 105 then supplies the 2D images 11 for N views, depth images 12 for N views, and residual information obtained as a result to the view synthesizing apparatus 15, and supplies the residual information to the residual information compensating apparatus 106.

In step S15, the view synthesizing apparatus 15 uses the 2D images 11 for N views and depth images 12 for N views supplied from the multiview video decoding apparatus 105 to conduct view synthesis for (M-N) views and generate synthetic-view images for (M-N) views. The view synthesizing apparatus 102 then supplies the synthetic-view images for (M-N) views and the 2D images 11 for N views to the residual information acquiring apparatus 103.

In step S16, the residual information compensating apparatus 106 adds the residual information supplied from the multiview video decoding apparatus 105 to the synthetic-view images for (M-N) views generated by the view synthesizing apparatus 15, and compensates for the missing information in the synthetic-view images for (M-N) views.

In step S16, the residual information compensating apparatus 106 outputs the compensated synthetic-view images for (M-N) views and the 2D images 11 for N views supplied from the view synthesizing apparatus 105 as reconstructed 2D images 107 for M views. The process then ends.

Although the 2D images 11 for N views, the depth images 12 for N views, and the residual information are all encoded in the foregoing description, information other than the 2D images 11 for N views may also not be encoded.

Additionally, it may be configured such that the multiview video encoding apparatus 104 also includes residual presence information indicating whether or not residual information exists for each synthetic-view image, and transmits this information to the multiview video decoding apparatus 105 together with the 2D images 11 for N views, the depth images 12 for N views, and the residual information.

Furthermore, it may also be configured such that the residual information transmitted to the multiview video decoding apparatus 105 together with the 2D images 11 for N views and the depth images 12 for N views is only residual information with respect to synthetic-view images at view synthesis positions farther outward than the views of the 2D images 11 for N views (in the example in Fig. 3, the synthetic-view images 2 for the two views left of the input image 1 for the view on the left side, and the synthetic-view images 2 for the two views right of the input image 1 for the view on the right side). Similarly, the transmitted residual information may only be residual information with respect to synthetic-view images at view synthesis positions farther inward than the views of the 2D images 11 for N views (in the example in Fig. 3, the synthetic-view images 2 for the two views in between the views of the input images 1 for two views).

Note that in this specification, the term "system" represents the totality of an apparatus composed of a plurality of apparatus.

In addition, embodiments of the present invention are not limited to the foregoing embodiments, and various modifications are possible within a scope that does not depart from the principal matter of the present invention.

### Reference Signs List

15 view synthesizing apparatus
104 multiview video encoding apparatus
105 multiview video decoding apparatus
106 residual information compensating apparatus

## Claims

1. An image processing apparatus comprising:
receiving means that receives residual information, which is the error between synthetic-view images generated using reference 2D images and depth information, and 2D images at the view synthesis positions of the synthetic-view images;
encoding means that encodes the reference 2D images to generate an encoded stream; and
transmitting means that transmits the residual information received by the receiving means, the depth information, and the encoded stream generated by the encoding means.

2. The image processing apparatus according to Claim 1, wherein
the encoding means generates a residual stream by encoding the residual information received by the receiving means, and
the transmitting means transmits the residual stream generated by the encoding means, the depth information, and the encoded stream.

3. The image processing apparatus according to Claim 1, wherein
the encoding means generates a depth stream by encoding the depth information, and
the transmitting means transmits the residual information, the depth stream generated by the encoding means, and the encoded stream.

4. The image processing apparatus according to Claim 1, further comprising:
computing means that computes the residual information by calculating the error between the synthetic-view images and 2D images at the view synthesis positions of the synthetic-view images.

5. The image processing apparatus according to Claim 1, wherein
the number of views in the reference 2D images is N, and
the number of views in the synthetic-view images is the value obtained by subtracting N from M, where M is greater than N.

6. The image processing apparatus according to Claim 5, wherein
the number of views in the reference 2D images is 2, and
the number of views in the synthetic-view images is 6.

7. The image processing apparatus according to Claim 1, wherein
the receiving means also receives residual presence information indicating whether or not residual information exists for the synthetic-view images, and
the transmitting means also transmits the residual presence information received by the receiving means.

8. The image processing apparatus according to Claim 1, wherein
the residual information is the error between outer synthetic-view images and 2D images at the view synthesis positions of the outer synthetic-view images, the outer synthetic-view images being the synthetic-view images at view synthesis positions farther outward than the views of the reference 2D images.

9. The image processing apparatus according to Claim 8, wherein
the receiving means receives outer residual presence information indicating whether or not error exists between the outer synthetic-view images and 2D images at the view synthesis positions of the outer synthetic-view images, and
the transmitting means also transmits the outer residual presence information received by the receiving means.

10. The image processing apparatus according to Claim 1, wherein
the residual information is the error between inner synthetic-view images and 2D images at the view synthesis positions of the inner synthetic-view images, the inner synthetic-view images being the synthetic-view images at view synthesis positions farther inward than the views of the reference 2D images.

11. An image processing method comprising:
a receiving step in which an image processing apparatus receives residual information, which is the error between synthetic-view images generated using reference 2D images and depth information, and 2D images at the view synthesis positions of the synthetic-view images;
an encoding step in which the image processing apparatus encodes the reference 2D images to generate an encoded stream; and
a transmitting step in which the image processing apparatus transmits the residual information received in the receiving step, the depth information, and the encoded stream generated in the encoding step.

12. An image processing apparatus comprising:
receiving means that receives residual information and depth information, the residual information being the error between synthetic-view images generated using reference 2D images and the depth information, and 2D images at the view synthesis positions of the synthetic-view images;
decoding means that decodes an encoded stream obtained as a result of encoding the reference 2D images;
generating means that generates the synthetic-view images using the reference 2D images decoded by the decoding means and the depth information received by the receiving means; and
residual information compensating means that adds the residual information received by the receiving means into the synthetic-view images generated by the generating means.

13. An image processing method comprising:
a receiving step in which an image processing apparatus receives residual information and depth information, the residual information being the error between synthetic-view images generated using reference 2D images and the depth information, and 2D images at the view synthesis positions of the synthetic-view images;
a decoding step in which the image processing apparatus decodes an encoded stream obtained as a result of encoding the reference 2D images;
a generating step in which the image processing apparatus generates the synthetic-view images using the reference 2D images decoded in the decoding step and the depth information received in the receiving step; and
a residual information compensating step in which the image processing apparatus adds the residual information received in the receiving step into the synthetic-view images generated in the generating step.
